# EUROPEAN PATENT APPLICATION

(11) **EP 2 214 392 A2**
(43) Date of publication of application: **04.08.2010**
(21) Application number: 10163423.6
(22) Date of filing: 28.08.2003
(51) Int. Cl.: H04M 11/00, H04M 15/00, H04W 4/24

(54) **System and method for third party application sales and services to wireless devices**

(30) Priority: 30.08.2002 US 231970
(62) Divisional of application: 03749189.1
(71) Applicant: Qualcomm Incorporated, San Diego, CA 92121-1714 (US)
(72) Inventor: Wake, Susan L., San Diego, CA, 92121 (US); Yu, Julie, San Diego, CA, 92121 (US)
(74) Representative: Heselberger, Johannes

(57) **Abstract**

A system, method, and computer program for billing wireless device subscribers for their interaction with applications and services resident on third party computer devices that are accessible through a wireless network. The wireless devices, such as cellular telecommunication devices, communicate with other computer devices across a wireless network and an end-user thereof, who is not necessarily the subscriber for the wireless service, can selectively download and execute software applications. Third party computer devices, such as application download servers, arc accessible on the wireless network and selectively provide applications and services to the wireless devices, and the interaction of the wireless devices with the third party computer devices causes billable events to occur, and a billing server gathers the billable event data, generates billing for the wireless device subscribers, and effects payment of the third parties for billable events at the computer devices of that third party.

## Description

### BACKGROUND OF THE INVENTION

### I. Field of the Invention

The present invention generally relates to wireless devices and wireless networks. More particularly, the invention relates to a system and method that permits third party application sales and services to wireless telecommunication devices across a wireless network, and the system properly accounts for and bills wireless service subscribers, and provides the appropriate proceeds to the third party for sold applications and services.

### II. Description of the Related Art

Wireless devices, such as cellular telephones, communicate packets including voice and data over a wireless network. In existing wireless telecommunication systems, such as cellular telecommunication systems, fees are charged to the subscriber for the initial activation of a telecommunication device and then fees can be charged for ongoing airtime and device usage. However, existing systems typically do not account for other activities at the telecommunication device beyond airtime usage.

Further, if the subscriber of the wireless device desires to download and use a software application or upgrade the functionality of the telecommunication device, the user will typically either call a service provider or contact the service provider through another electronic means, such as through a separate Internet access. In some instances, the service provider can transmit the application to the wireless device across the wireless network (through a one time direct access download) or allow the user access a network site with the wireless device through the wireless network and at such site the application is downloadable or accessible to the subscriber. Otherwise service personnel of the provider must have physical access to the telecommunication device to install the software or upgrade the components thereof.

The existing systems for monitoring and billing for wireless telecommunication device activity thus do not allow a service provider to bill or account for activities by the wireless device that not occur on the computer devices of that provider. In order to provide any additional billed services to the subscriber or end-user of the telecommunication device, the service provider must have the subscriber contact and use the computer devices of the service provider which greatly limits the value-added service that a provider can make available to its subscribers. Accordingly, it is to a system and method that allows the monitoring and billing of wireless device activity that the present invention is primarily directed.

### SUMMARY OF THE INVENTION

The present invention is a system, method, and computer program for billing wireless device subscribers for their interaction with applications and services resident on third party computer devices that are accessible through a wireless network. The wireless devices, such as cellular telecommunication devices, communicate with other computer devices across a wireless network and an end-user thereof, who is not necessarily the subscriber for the wireless service for that wireless device, can selectively download and execute software applications on the computer platform. Also on the wireless network are third party computer devices, such as application download servers, that selectively provide value-added applications and services to the wireless devices and the interaction of the wireless devices with the applications of the third party computer devices causes billable events to occur, such as an application download execution, or access. A billing server ultimately gathers the billable event data across the wireless network, generates billing for the wireless device subscribers, and effects payment of the third party for the billable events of wireless devices with the computer devices of the third party.

The system includes one or more wireless devices where each include a computer platform and an end-user thereof, with one or more third party computer devices that selectively provide applications and services to the one or more wireless devices across the wireless network, and the interaction of the wireless devices with the applications or services of the third party computer devices causes one or more billable events to occur for the interacting wireless device. At least one billing server is in the system that gathers at least the billable event data from wireless device interaction with the one or more third party computer devices, and also effects payment of the third party based upon the gathered billable event data for the billable events at the third parties' computer devices. In one embodiment, the billing server also generates a bill for each wireless device for the billable events.

The method of billing for third party applications and services provided to the wireless devices of subscribers to a wireless network includes the steps of causing a billable event to occur through wireless device interaction with a third party computer device, aggregating the billable events into billable event data at a billing server, billing the appropriate subscriber for each billable event based upon the billable event data at the billing server, and effecting payment of the third party for the billable events at the third party computer device. The method can also include the steps of billing the wireless subscriber from the billing server and prompting the third party computer devices to transmit gathered billable event data to the billing server.

The system and method accordingly allow wireless service providers the ability to provide and bill for wireless telecommunication device activity, such as application download and execution, with third party computer devices accessible through the wireless network. The system and method accordingly give an advantage to the service provider in that the provider can give its subscribers access to additional value-added services of third parties and effectively capture and share the revenue from the billed services. Moreover, the billing system does not require the subscriber to contact the service provider or the third party to receive or access the additional service.

Other objects, advantages, and features of the present invention will become apparent after review of the hereinafter set forth Brief Description of the Drawings, Detailed Description of the Invention, and the Claims.

### BRIEF DESCRIPTION OF THE DRAWINGS

Fig. 1 is a representative diagram of a wireless network and the computer hardware and wireless devices that can be used within the wireless device billing system.

Fig. 2 is a block diagram illustrating a cellular telecommunication network with the billing system tracking billable events occurring on wireless telephones that interact with servers and other computer devices across the wireless network.

Fig. 3 is an interactive menu that is presented to end-users of the wireless device when contacting a third party application download server across the wireless network, and a plurality of options for interaction is represented on the display.

Fig. 4 is a flowchart illustrating one embodiment of the process executing on the computer platform of the third party computer application download server wherein billable event data is either transmitted to the billing server as the events are completed, or stored and transmitted to the billing server upon request.

Fig. 5 is a flowchart illustrating one embodiment of the process executing on the billing server that receives a request to generate billing for the billable events of the wireless devices at third party computer devices, and the billing server gathers and processes the billable event data for each of the wireless devices to create billing information that can be transmitted to the carrier or other billing entity for the wireless devices, and effects payment of the third parties for the billable events at their respective computer devices.

### DETAILED DESCRIPTION OF THE INVENTION

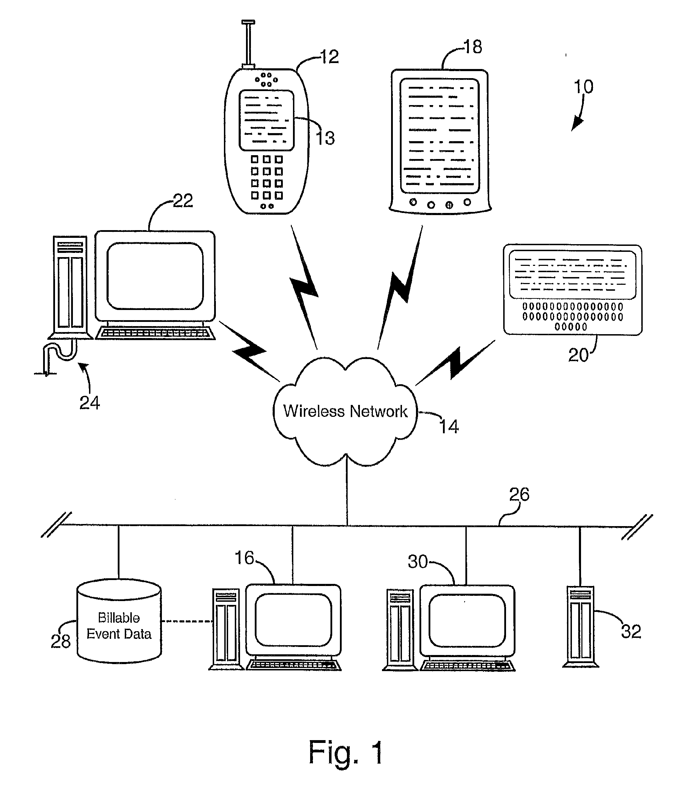

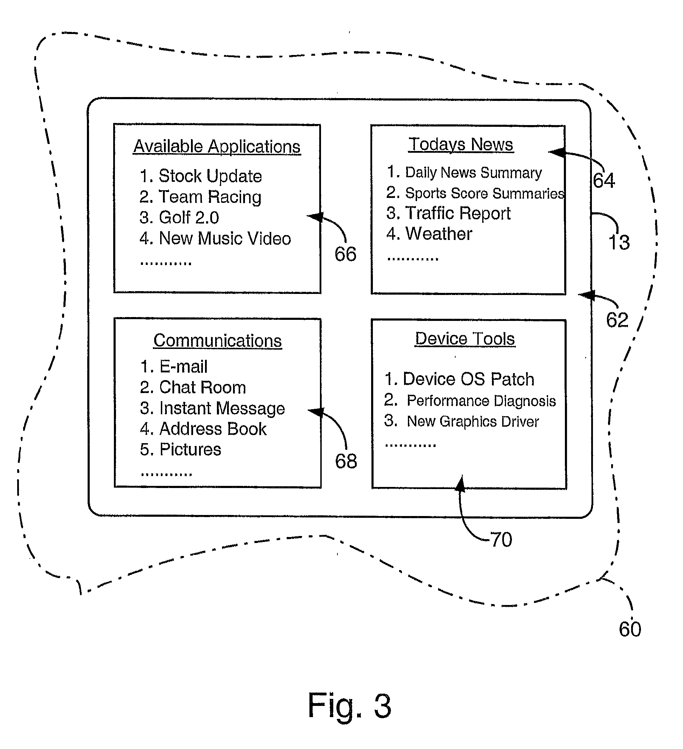

With reference to the figures in which like numerals represent like elements throughout, Fig. 1 illustrates one embodiment of the present inventive system 10 for tracking billable events occurring through wireless devices, such as cellular telephone 12, in communication across a wireless network 14, with third party computer devices, such as a third party application download server 30, that selectively downloads software applications or other data to the wireless devices across a wireless communication portal or other data access to the wireless network 14. In developing wireless networks 14, if the end-user of the wireless device desires to download and use a software application, the end-user will attempt to connect to an application download server, either the carrier's server or a third party application download server 30, through bridging a communication connection to the wireless network 14, and attempt to access and download the desired software application. Once the wireless device contacts the application download server 30, an initial contact is made and the application download server 30 can determine what applications and data are available to that wireless device 12,18,20,22 and send the appropriate information, such as a menu (Fig. 3), for display on the wireless device 12,18,20,22 so the end-user can learn of the available applications and services.

As shown here, the wireless device can be a cellular telephone 12, with a graphics display 13, a personal digital assistant 18, a pager 20 with a graphics display, which is shown here as a two-way text pager, or even a separate computer platform 22 that has a wireless communication portal, and may otherwise have a wired connection 24 to a network or the Internet. The system 10 can thus be performed on any form of remote computer module including a wireless communication portal, including without limitation, wireless modems, PCMCIA cards, access terminals, personal computers, access terminals, telephones without a display or keypad, or any combination or subcombination thereof. Further, the term "application" as used herein is intended to encompass executable and nonexecutable software files, raw data, aggregated data, patches, and other code segments.

In the system 10, one or more wireless devices 12,18,20,22 that each selectively communicate with other computer devices across a wireless network 14, an end-user thereof who can selectively download and execute software applications. The wireless devices 12,18,20,22 to one or more third party computer devices, such as third party application download server 30 and stand-alone server 32, and the interaction of the wireless devices with the applications of the third party computer devices causes one or more billable events, and at least one billing server 16 gathers at least the billable event data for the billable events from wireless device interaction with the one or more third party computer devices (servers 30 and 32). The billable events can be the purchase, download and/or execution of an application, access to a menu, wireless device tools and diagnosis, or any other value-added data interaction between the wireless device 12,18,20,22 and the third party computer device (server 30 and 32). The billing server 16 then effects payment of the third party for the billable events at that third parties servers, as is more further described herein.

The one or more wireless devices 12,18,20,22, typically at the direction of an end-user operating the device, selectively communicate with other computer devices across a wireless network, application download server 30 or third party stand alone server 32, both shown here on a local server-side network 26 with other computer elements in communication with the wireless network 14, such as a billable event database 28 that contains the billable event data for the wireless devices. The application download server 30 and a stand-alone server 32 provide value-added services to the wireless devices, such as downloadable applications and other interaction, such as live stock quotes, news, and interactive games. All of the components can work in tandem to gather data relative to billable events of the wireless devices 12,18,20,22 and aggregate the billable event data at the billing server 16 as is further described herein. However, it should be noted that all server-side functions can be performed on one server, such as billing server 16. Further, any computer or server-side computer platform can provide separate services and processes to the wireless devices 12,18,20,22 across the wireless network 14.

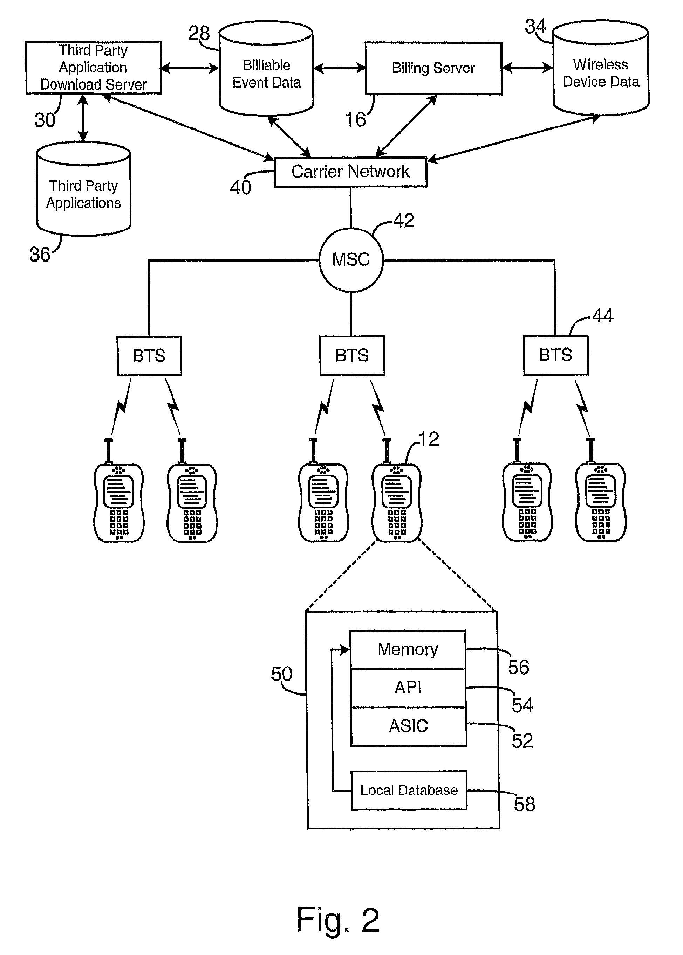

Fig. 2 is a block diagram that more fully illustrates the components of the wireless network 14 and interrelation of the elements of the system 10. The wireless network 14 is merely exemplary and can include any system whereby remote modules, such as wireless devices 12,18,20,22, communicate over-the-air between and among each other and/or between and among components of a wireless network 14, including, without limitation, wireless network carriers and/or servers. The server side components are a billing server 16, third party application download server 30, a billable event database 28, a wireless device database 34, and a third party applications database 36. Other server-side components will be present on the cellular data network with any other components that are needed to provide cellular telecommunication services. The server-side components as embodied in Fig. 2 can by themselves create a billing system 10 solely through tracking applications downloaded from the third party application download server 30 and the billing for the download will be generated through correlation of the billable event database 28 and wireless device database 34 by the billing server 16. The third party application download server 30 can have a separate third party applications database 36 that provides applications and other services to the wireless devices 12,18,20,22. With the use of third party hardware readily scalable, the number of computer devices that can be made accessible to the wireless devices is theoretically unlimited.

The server-side components communicate with a carrier network 40 through a data link, such as the Internet, a secure LAN, WAN, or other network. The carrier network 40 controls messages (generally in the form of data packets) sent to a messaging service controller ("MSC") 42. The carrier network 40 communicates with the MSC 42 by a network, the Internet and/or POTS ("plain ordinary telephone system"). Typically, the network or Internet connection between the carrier network 40 and the MSC 42 transfers data, and the POTS transfers voice information. The MSC 42 is connected to multiple base stations ("BTS") 44. In a similar manner to the carrier network, the MSC 42 is typically connected to the BTS 44 by both the network and/or Internet for data transfer and POTS for voice information. The BTS 44 ultimately broadcasts messages wirelessly to the wireless devices, such as cellular telephone 12, by short messaging service ("SMS"), or other over-the-air methods known in the art.

The wireless device, such as cellular telephone 12, has a computer platform 50 that can receive and execute software applications transmitted from the application download server 16. The computer platform 50 includes, among other components, an application-specific integrated circuit ("ASIC") 52, or other processor, microprocessor, logic circuit, programmable gate array, or other data processing device. The ASIC 52 is installed at the time of manufacture of the wireless device and is not normally upgradeable. The ASIC 52 or other processor executes an application programming interface ("API") layer 54 that interfaces with any resident programs in the memory 56 of the wireless device. The memory can be comprised of read-only or random-access memory (RAM and ROM), EPROM, EEPROM, flash cards, or any memory common to computer platforms. The computer platform 50 also includes a local database 58 that can hold the software applications not actively used in memory 56, such as the software applications downloaded from the third party application download server 16. The local database 58 is typically comprised of one or more flash memory cells, but can be any secondary or tertiary storage device as known in the art, such as magnetic media, EPROM, EEPROM, optical media, tape, or soft or hard disk.

Cellular telephones and telecommunication devices, such as cellular telephone 12, are being manufactured with increased computing capabilities and are becoming tantamount to personal computers and hand-held personal digital assistants ("PDAs"). These "smart" cellular telephones allow software developers to create software applications that are downloadable and executable on the processor, such as ASIC 52, of the cellular device. The wireless device, such as cellular telephone 12, can download many types of applications, such as games and stock monitors, or simply data such as news and sports-related data. The downloaded data or executed applications can be immediately displayed on the display 13 or stored in the local database 58 when not in use. The software applications can be treated as a regular software application resident on the wireless device 12,18,20,22, and the user can selectively upload stored resident applications from the local database 58 to memory 56 for execution on the API 54. The user of the wireless device 12,18,20,22 can also selectively delete a software application from the local database 58. As a result, end-users of cellular telephones 12 can customize their telephones with programs, such as games, printed media, stock updates, news, or any other type of information or program available for download from application download servers through the wireless network 14.

The use of these value-added services of third parties by the wireless device 12,18,20,22 cause billable events for which the wireless network service provider will bill the subscriber of the wireless device, who is not necessarily the end-user of the wireless device at the time of the billable event. The billable events typically occur from the end-user conducting some activity with applications provided from the third party application download server 30. Examples of billable events, include but are not to be limited to, downloading an application from a third party application download server 30 on the wireless network 14 to the wireless device computer platform 50; the execution of an application on the wireless device 12,18,20,22; accessing an application resident on another computer device on the wireless network 14, such as stand-alone server 32 through application download server 30, or a database such as third party application database 36; or other parameter of execution or interaction therewith.

The system 10 allows a third party, such as an independent software vendor or developer, either through the third parties own computer devices or through a network carrier 40 servers, to provide its software applications as downloadable to the wireless device. A multitude of computer devices can be involved in the ultimate delivery of applications and services, and the wireless device 12,18,20,22 can make several accesses to one or more third party computer devices. The system 10 can thus after-bill the carrier 40 for their subscriber billable event transactions, which typical is a different fee than what the carrier 40 will use to bill their subscribers. Unless the payment of the third party vendor and developers is automatic, the system 10 will wait until payment from the carrier (or wireless device subscriber) are received, and then aggregate payments from multiple carriers as necessary and pay all third parties that are a member of the transactions. This provides the capability for the third party that otherwise sells an application or service to one or more carriers 40 to elected to share its payment with other parties, which the system 10 can account for.

The billing server 16 can therefore aggregate all payments due each third party and creates a single or multiple payments to the third party. Moreover, the billing server 16, or another computer device in conjunction therewith, can accommodate any parameters of payment of a particular third party for billable events, such as converting payment to and from foreign currencies (with appropriate currency gain/loss between time of invoice and payment), withholding of any appropriate taxes (US or foreign), and any rebates or pricing incentives.

To illustrate the possible services provided from the third party application download server 30 to the wireless devices 12,18,20,22, Fig. 3 is a partial view 60 of the display 13 having an menu 62 displayed thereon listing potential interactions with the download server 30. Simple data for display at the wireless device is shown in an available news section 64, wherein the wireless device will pay for simple access to the data. Further, a plurality of applications downloadable to wireless devices 12,18,20,22, from the third party application download server 30 is shown in section 66. The subscriber for the wireless device (end-user or not) will be discretely billed if one or more of the applications are downloaded.

A communications section 68 is presented to the end-user wherein a variety of methods of communication with other devices on the wireless network 14 are provided. The billable event for use of the communication can be based per communication, such as e-mail, size of data communicated, or based upon the duration of a communication. A device tool section 70 can also be present that allows the wireless device 12,18,20,22 to upgrade, optimize, or fix any technically adjustable parameter. For example, a performance diagnosis can be effected from the third party application server 30 whereby the ongoing operation of the device can be alter through passing operational data from the wireless device 12,18,20,22 to the server, such as stand alone server 32, and the server 32 can manipulate the wireless device operation through the use of software commands. The wireless device subscriber can be billed for the use of any diagnosis tool. Additionally, software patches and other software fixes or upgrades can be posted to the tools section 70 to allow the wireless device 12,18,20,22 to maintain the most current versions of software on the computer platform 50.

The billable event data for the one or more wireless devices 12,18,20,22 is ultimately gathered at billing server 16 such that the billing information for each wireless device that the billing server 16 accounts for. As embodied in Fig. 2, the billing information will ultimately be provided to the carrier network 40 for billing to the carrier's subscriber. However, the billing server 16 itself can generate a bill to the wireless device subscriber, for whom it can access the information of the wireless device data 34. While the billable event data is ultimately gathered at the billing server 16, the third party computer device (application download server 30) can also gather the billable event data and transmit it periodically to the billing server 16. The third party computer device can transmit billable event data to the billing server 16 at the completion of the billable event, upon query from the billing server 16, or at a predetermined interval of time, e.g. every 30 minutes while active. And if the billing server 16 further generates a bill for a wireless device 12,18,20,22 based upon the gathered billable event data, the generated bill can be transmitted from the billing server 16 to another computer device on the wireless network 14, such as a device on the carrier network 40 for use by the carrier in billing its subscribers.

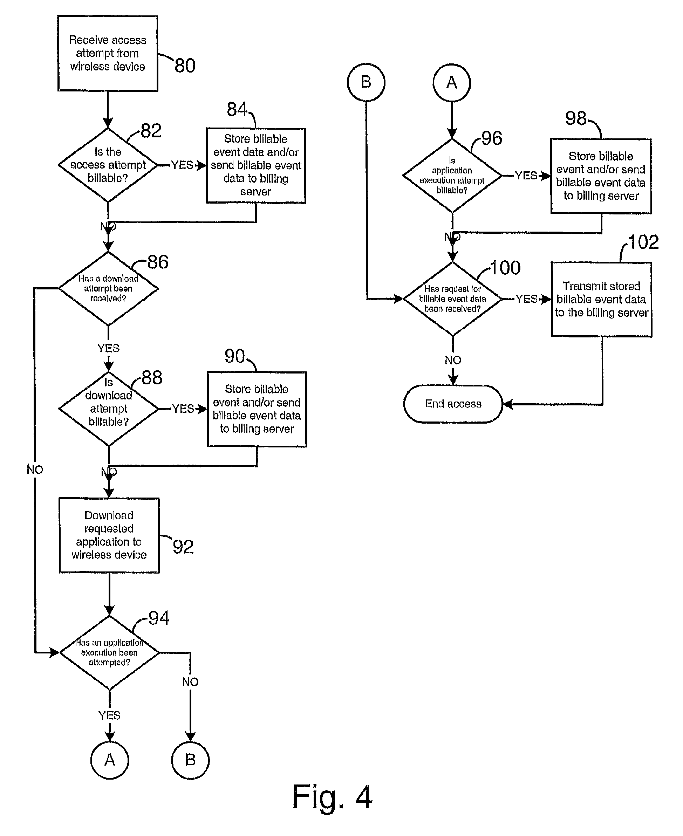

Fig. 4 is a flowchart illustrating one embodiment of the process executing on the computer platform of the third party computer application download server 30 wherein billable event data is either transmitted to the billing server 16 as the events are completed, or stored and transmitted to the billing server 16 upon request. The third party application download server 30 receives an access attempt from a wireless device 12,18,20,22, as shown at step 80, and then a determination is made as to whether the access attempt is in itself a billable event, as shown at decision 82. If the access is a billable event at decision 82, then the third party application download server 30 stores the billable event data, or transmits the data to the billing server 16, or both, as shown at step 84. Otherwise, if the access attempt is not billable at decision 82, or after the billable event data storage or transmission step 84, a determination is then made as to whether a download attempt has been received, as shown at decision 86.

If a download attempt has not been detected at decision 86, the process forwards to decision 94 which is further described herein. If a download attempt has been detected at decision 86, a determination is then made as to whether the download attempt is billable, as shown at decision 88. If the download attempt is a billable event at decision 88, then the third party application download server 30 stores the billable event data, or transmits the data to the billing server 16, or both, as shown at step 90. Otherwise, if the download attempt is not billable at decision 88, or after the billable event data storage or transmission step 90, the requested application is downloaded to the wireless device 12,18,20,22, as shown at step 92.

After the application has been downloaded at step 92, or if an application download attempt has not been received at decision 86, a determination is made as to whether the execution of an application resident on the third party application download server 30 has been attempted, as shown at decision 94. If an execution of an application has not been attempted at decision 94, then the process forwards to decision 100, which is further described below. If the execution of an application has been attempted at decision 94, a determination is then made as to whether the execution attempt is billable, as shown at decision 96. If the execution attempt is a billable event at decision 96, then the third party application download server 30 stores the billable event data, or transmits the data to the billing server 16, or both, as shown at step 98. Otherwise, if the download attempt is not billable at decision 96, or after the billable event data storage or transmission step 98, or if an execution of application was not attempted at decision 94, a determination is then made as to whether the billing server 16 has requested the stored billable event data from the third party application download server 30, as shown at decision 100. If the stored billable event data has been requested at decision 100, then the stored billable event data is transmitted to the billing server 16 as shown at step 102 and then the process or thread of application access of the wireless device ends. Otherwise, if the request for transmission of the billable event data has not received at decision 100, then the process ends. The process of Fig. 4 will then reoccur upon an access attempt of the wireless device 12,18,20,22, such as the device attempting to access an application in section 66 of the menu 62 of Fig. 3.

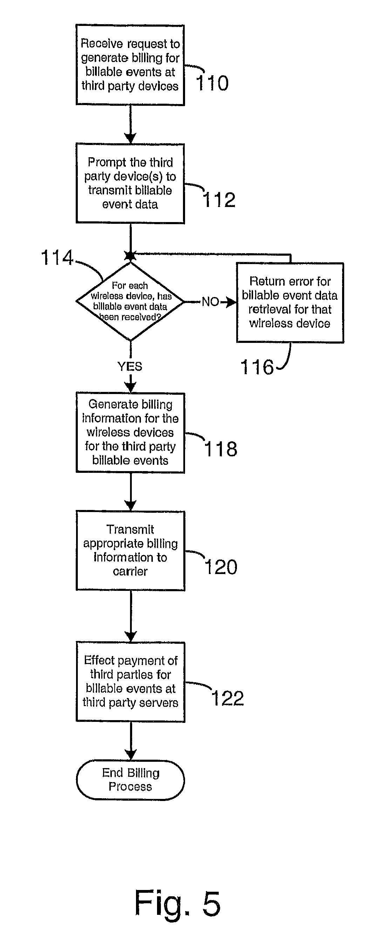

Fig. 5 is a flowchart illustrating one embodiment of the process executing on the billing server 16 that receives a request to generate billing for the billable events of the wireless devices 12,18,20,22 at third party computer devices, such as third party application download server 30, and the billing server 16 gathers and processes the billable event data for each of the wireless devices 12,18,20,22 to create billing information that can be transmitted to the carrier 40 or other billing entity for the wireless devices, and can effect payment of the third parties for the billable events at their respective computer devices. In the process or thread, the billing server 16 receives a request to generate billing for the billable events of the wireless devices 12,18,20,22, as shown at step 110. Then the billing server 16 prompts the third party computer devices (servers 30 and 32) to transmit their stored billable event data as shown at step 112, and then a determination is made as to whether the billable event data for each wireless device has been received, as shown at decision 114.

If the billable event data for a particular wireless device has not been received at decision 114, an error is returned for the billable event retrieval for that wireless device. Otherwise, once all of the billable events for the wireless devices 12,18,20,22 for which the billing information is requested has been obtained, the billing information is generated for the third party billable events, as shown at step 118, and the billing information is then transmitted to the carrier, as shown at step 120. The embodiment of Fig. 5 assumes that the carrier will ultimately bill the subscriber of the wireless device 12,18,20,22 for all third party services, but step 120 could likewise be transmitting a bill to the subscriber of the wireless device. Then, if so embodied, the billing server effects payment of the third parties for the billable events of the wireless devices 12,18,20,22 at that third parties' computer devices, as shown at step 122, after which the billing generation process terminates.

It can be seen that the system 10 thus provides a method of billing for third party applications and services provided to the wireless devices 12,18,20,22 of subscribers to a wireless network 14, including the steps of causing a billable event to occur through wireless device 12,18,20,22 interaction with a third party computer device, such as third party application download server 30, aggregating the billable events into billable event data at a billing server, as shown in the steps of Fig. 5, and then billing the appropriate wireless service subscriber for each billable event based upon the billable event data at the billing server 16. The method can include the step of effecting payment of the third party for billable events that occurred at the one or more computer devices of that third party.

The step of aggregating the billable events into billable data can occur at the billing server 16, or at the third party computer device such that the method further includes a step of transmitting the billable event data to the billing server 16 from the third party computer device, as shown in step 122 of Fig. 5. The step of transmitting the billable event data can alternately be transmitting the bill from the billing server 16 to another computer device on the wireless network 14, such as stand-alone server 32 or another computer device on the carrier network 40. If embodied so as to bill the wireless subscriber, the method can then include the steps of obtaining wireless device subscriber data, such as from wireless device database 34, and then generating a bill at the billing server for a wireless device based upon the billable event data, as shown at step 118 of Fig. 5.

The step of causing one or more billable events can be causing a billable event through the download of an application from a third party application download server 30 on the wireless network 14 to the wireless device 12,18,20,22, through the execution of an application on the wireless device as shown at decision 94 in Fig. 4, or through access of the wireless device 12,18,20,22 to an application resident on a third party computer device on the wireless network 14, as shown in Fig. 4. As is shown in Fig. 5, the method can also include the step of prompting the third party computer device from the billing server 16 to transmit billable event data to the billing server 16 to start the billing process.

In view of the method being executable on the computer platform of a computer device such as billing server 16 or third party computer device (servers 30 and 32), the present invention includes a program resident in a computer readable medium, where the program directs a server or other computer device having a computer platform to perform the steps of the method. The computer readable medium can be the memory of the billing server 16, or can be in a connective database, such as billable event database 28. Further, the computer readable medium can be in a secondary storage media that is loadable onto a wireless device computer platform, such as a magnetic disk or tape, optical disk, hard disk, flash memory, or other storage media as is known in the art.

In the context of Figs. 4 and 5, the method may be implemented, for example, by operating portion(s) of the wireless network 14 to execute a sequence of machine-readable instructions, such as wireless device computer platform 50, the billing server 16, and third party application download server 30. The instructions can reside in various types of signal-bearing or data storage primary, secondary, or tertiary media. The media may comprise, for example, RAM (not shown) accessible by, or residing within, the components of the wireless network 14. Whether contained in RAM, a diskette, or other secondary storage media, the instructions may be stored on a variety of machine-readable data storage media, such as DASD storage (e.g., a conventional "hard drive" or a RAID array), magnetic tape, electronic read-only memory (e.g., ROM, EPROM, or EEPROM), flash memory cards, an optical storage device (e.g. CD-ROM, WORM, DVD, digital optical tape), paper "punch" cards, or other suitable data storage media including digital and analog transmission media.

While the foregoing disclosure shows illustrative embodiments of the invention, it should be noted that various changes and modifications could be made herein without departing from the scope of the invention as defined by the appended claims. Furthermore, although elements of the invention may be described or claimed in the singular, the plural is contemplated unless limitation to the singular is explicitly stated.

Further examples of the invention:
1. A system for providing and billing for third party applications and services to the wireless devices of subscribers to a wireless network, comprising:
   one or more wireless devices that each selectively communicate with other computer devices across a wireless network, each wireless device further including a computer platform and an end-user thereof who can selectively download and execute software applications on the computer platform;
   one or more third party computer devices that selectively provide applications and services to the one or more wireless devices across the wireless network, the interaction of the wireless devices with the applications of the third party computer devices causing one or more billable events; and
   at least one billing server that gathers at least billable event data for the billable events from wireless device interaction with the one or more third party computer devices, and the billing server effecting payment of a third party for the billable events of the applications and services of that third party.
2. The system of 1, wherein the billing server further generates a bill for each wireless device for the billable events of that wireless device.
3. The system of 1, wherein the billable event data is gathered only at the billing server.
4. The system of 1, wherein the billing server further generates a bill for each wireless device based upon the gathered billable event data.
5. The system of 4, wherein the generated bill is transmitted from the billing server to the network carrier.
6. The system of 1, wherein the billable event is the download to the wireless device computer platform of an application from a third party application download server on the wireless network.
7. The system of 1, wherein the billable event is the execution of an application on the wireless device.
8. The system of 1, wherein the billable event is access to an application resident on a third party computer device.
9. The system of 1, wherein the third party computer device gathers billable event data and transmits the gathered billable event data to the billing server.
10. The system of 9, wherein the third party computer device transmits billable event data to the billing server upon query from the billing server.
11. A system for providing and billing for third party applications and services on a wireless network, comprising:
   a wireless communication means for selectively communicating with other computer devices across a wireless network and selectively downloading and executing software applications;
   an application means that selectively provides applications and services to the wireless communication means across the wireless network, the interaction of the wireless communication means devices with the application means causing one or more billable events, and the applications and service provided by a third party; and
   a billing means for gathering the billable event data for the billable events and paying the third party for the billable events.
12. A method of billing for third party applications and services provided to the wireless devices of subscribers to a wireless network, comprising the steps of:
   causing a billable event to occur through wireless device interaction with a third party computer device;
   aggregating the billable events into billable event data at a billing server;
   billing the appropriate subscriber for each billable event based upon the billable event data at the billing server; and
   effecting payment of the third party for billable events that occurred at the computer devices of that third party.
13. The method of 12, wherein step of aggregating the billable events into billable data occurs at a billing server.
14. The method of 12, wherein the step of aggregating the billable events into billable data occurs at the third party computer device, and further comprising the step of transmitting the billable event data to the billing server from the third party computer device.
15. The method of 12, further comprising the steps of:
   obtaining wireless device subscriber data; and
   generating a bill at the billing server for a wireless device based upon the billable event data.
16. The method of 15, further comprising the step of transmitting the bill from the billing server to another computer device on the wireless network.
17. The method of 12, wherein the step of causing one or more billable events is causing a billable event through the download of an application from a third party application download server on the wireless network to the wireless device.
18. The method of 12, wherein the step of causing one or more billable events is causing a billable event through the execution of an application on the wireless device.
19. The method of 12, wherein the step of causing one or more billable events is causing a billable event through access of the wireless device to an application resident on a third party computer device on the wireless network.
20. The method of 14, further comprising the step of prompting the third party computer device to transmit billable event data to the billing server.
21. A method of billing for third party applications and services provided to the wireless devices of subscribers to a wireless network, comprising the steps of:
   a billable event causation step that occurs through wireless device interaction with a third party computer device;
   a billable event data aggregation step of the billable events at a billing server;
      and
   a billing step of the appropriate subscriber for each billable event, the billing step based upon the billable event data at the billing server; and
   a payment step of the third party for billable events that occurred at the computer devices of that third party.
22. A server for billing wireless device subscribers for billable events occurring from the wireless device interaction with third party applications and services resident on third party computer devices accessible through a wireless network, the wireless device able to selectively download and execute software applications, and the server further gathering billable event data for the billable events from wireless device interaction with the third party computer devices, and effecting payment of the third party for billable events that occurred at the computer devices of that third party.
23. The server of 22, wherein the server further generates a bill for the wireless device for at least the billable events of that wireless device.
24. The server of 23, wherein the billing server further generates a bill for a wireless device subscriber based upon the gathered billable event data.
25. The server of 24, wherein the generated bill is transmitted from the billing server to another computer device on the wireless network.
26. The server of 22, wherein the server receives billable event data from third party computer devices.
27. The server of 26, wherein the server further prompts third party computer device to transmits billable event data to the server.
28. A computer program that, when executed by a computer device on a wireless network including one or more wireless devices and third party computer devices, directs the computer device to bill for billable events that occur through wireless device interaction with third party applications and services on third party computer devices, through performing the steps of:
   aggregating the billable events into billable event data;
   billing the appropriate wireless device subscriber for each billable event based upon the billable event data; and
   effecting payment of the third party for billable events that occurred at the computer devices of that third party
29. The program of 28, further directing the computer device to perform the step of receiving the billable event data from the third party computer device.
30. The program of 28, further directing the computer device to perform the step of receiving wireless device subscriber data.
31. The program of 30, further directing the computer device to perform the step of generating a bill for a wireless device based upon the billable event data.
32. The program of 31, further directing the computer device to perform the step of transmitting the bill to another computer device on the wireless network.
33. The program of 28, further directing the computer device to perform the step of prompting a third party computer device to transmit billable event data.

## Claims

1. A system for providing and billing for third party applications or services to a wireless device of subscribers in a wireless network, the system comprising a billing server, the billing server comprising:
means for gathering at least billable event data for one ore more billable events resulting from interaction between a wireless device and one or more third party computer devices communicating across a wireless network;
means for effecting payment for the one ore more billable events caused by the interaction of the wireless device with applications or services of the respective third party computer device;
means for generating billing information based on the billable event data;
and
means for transmitting the billing information to a wireless network carrier.

2. The system of claim 1, the interaction between a wireless device and one or more third party computer devices comprising a download or an execution of a software application or a service on a computer platform of the wireless device.

3. The system of claims 1 or 2, wherein the billable event data is generated on a server-side computer platform.

4. The system of claims 1 or 2, wherein the billable event data is generated at the one ore more third party devices.

5. The system of claims 1 or 2, wherein the billable event data is generated at the wireless device.

6. A system for billing for third party applications or services to a wireless devices of a subscriber in a wireless network, comprising:
one or more wireless devices that each selectively communicates with other computer devices across a wireless network, each wireless device including a computer platform operable to selectively download and execute software applications thereon;
one or more third party computer devices operable to selectively provide one ore more applications or services to the one or more wireless devices across the wireless network, interaction of the one ore more wireless devices with the one ore more applications or services of the one ore more third party computer devices causing one or more billable events; and
at least one billing server according to any of the claims 1 to 5.

7. The system of claim 6, wherein the at least one billing server further comprises:
means for aggregating payments from one ore more wireless network carriers for one ore more billable events that occurred at the one ore more third party computer device.

8. The system of claims 6 or 7, wherein the wireless device is operable to selectively transmit a request for the one ore more third party applications or services over the wireless network.

9. The system of any of the claims 6 to 8, wherein the one ore more third party computer devices are operable to determine if the transmission of the applications or services represents a billable event.

10. The system of any of the claims 6 to 9, wherein the one ore more third party applications and services represent at least one of: a purchased application, a downloaded application, the execution of an application, a wireless device tool application, a wireless device diagnosis application or access to a menu.

11. A method for providing and billing for one ore more third party applications or services to a wireless devices of a subscriber in a wireless network, the method comprising:
gathering at least billable event data for one ore more billable events resulting from interaction between a wireless device and one or more third party computer devices communicating across a wireless network;
effecting payment for the one ore more billable events caused by the interaction of the wireless device with applications or services of the respective third party computer device;
generating billing information based on the billing event data; and
transmitting the billing information to a wireless network carrier.

12. The method of claim 11, further comprising:
downloading or executing an application or a service on a computer platform of the wireless device.

13. The method of claims 11 or 12, wherein the billable event data is generated at the one ore more third party devices.

14. The method of claims 11 or 12, wherein the billable event data is generated at the wireless device.

15. A computer program comprising instructions for performing, when executed on a computer, a method of any of the claims 11 to 14.
